# EUROPEAN PATENT APPLICATION

(11) **EP 4 685 859 A1**
(43) Date of publication of application: **28.01.2026**
(21) Application number: 24913495.8
(22) Date of filing: 20.12.2024
(51) Int. Cl.: H01M 4/04, H01M 4/70, B05C 11/02, B05C 5/02

(54) **ELECTRODE MANUFACTURING APPARATUS COMPRISING DIE FOR FORMING INSULATING LAYER**

(30) Priority: 29.12.2023 KR 20230197769
(71) Applicant: LG Energy Solution, Ltd., Seoul 07335 (KR)
(72) Inventor: PARK, Manshik, Daejeon 34122 (KR)
(74) Representative: Plasseraud IP
(86) International application number: PCT/KR2024/020883
(87) International publication number: WO 2025/143702

(57) **Abstract**

The present invention provides an electrode manufacturing device comprising: a coater roller disposed to support an electrode sheet material; a moving space part in which the electrode sheet material is moved by the rotation of the coater roller; and a die for forming an insulating layer, installed on a moving path of the electrode sheet material, wherein the die for forming an insulating layer comprises: a nozzle part for spraying an insulating liquid onto the electrode sheet material; a first angle adjusting part for adjusting an angle of the nozzle part in a moving direction of the electrode sheet material; a second angle adjusting part for adjusting an angle of the nozzle part in a direction perpendicular to the moving direction of the electrode sheet material; and an azimuth adjusting part formed to draw an arc around the rotation axis of the coater roller and capable of moving a position of the nozzle part along the arc.

## Description

### TECHNICAL FIELD

The present invention relates to an electrode manufacturing device comprising a die for forming an insulating layer.

### BACKGROUND ART

With the development of technology and the increase in demand for mobile devices, the demand for secondary batteries is also rapidly increasing. Among them, lithium secondary batteries are widely used as an energy source for various mobile devices as well as various electronic products due to high energy density and operating voltage as well as excellent preservation and lifespan characteristics.

One of the main objectives in field of the secondary batteries is to improve safety. The main cause of safety-related accidents in batteries is due to abnormal high temperature conditions caused by short circuits between positive and negative electrodes. That is, under normal circumstances, a separator is positioned between the positive and negative electrodes to maintain electrical insulation, but in abnormal misuse situations such as overcharge or overdischarge of the battery, internal short circuits caused by dendritic growth of electrode materials or foreign substances, sharp objects such as nails and screws, penetrating the battery, and excessive deformation of the battery due to external force, the existing separator alone has limitations.

In addition, a separator mainly using a microporous membrane composed of a polyolefin resin has a heat resistance temperature of about 120 to 160°C which can be insufficient heat resistance. Therefore, if internal short circuit occurs, the separator shrinks due to short circuit reaction heat, the short circuit area expands, and a thermal runaway state occurs in which a larger amount of reaction heat is generated.

Therefore, in order to maintain the insulation of the battery electrode and reduce the possibility of short circuiting between the positive and negative electrodes, an insulating layer is coated on the electrode, generally a portion of the positive electrode. For example, the insulating layer may be formed to partially overlap the terminal portion of an active material layer and a portion of an electrode current collector where the active material layer is not formed (non-coated part), which may prevent the positive electrode tab part and the negative electrode from directly contacting each other if the separator shrinks due to an abnormally high temperature, thereby improving safety. In this case, the active material layer may be formed so that the terminal part has a slope toward the current collector due to the viscosity characteristics of an electrode slurry.

The insulating layer is formed by spraying an insulating liquid to a target position, and the spraying of the insulating liquid may be performed through a die for forming an insulating layer. Existing dies for forming an insulating layer are fixedly positioned in consideration of the forming location, thickness, or the like of a target insulating layer. In this case, the selection of an appropriate position of the die for forming an insulating layer is an important issue. For example, if the distance between the active material layer and the die for forming an insulating layer is too small, a scratching phenomenon of the application layer of the active material layer may occur, and if the distance between the active material layer and the die for forming an insulating layer is widened to prevent the phenomenon, the thickness of the formed insulating layer may become too thick, and there is a concern that the insulating layer may swell by an electrolyte, causing a change in shape such as bending of an electrode shape, or a detachment phenomenon of the insulating layer. In particular, considering that a slope may be formed at the end of the active material layer due to the viscosity characteristics of the electrode slurry, the above-mentioned problem may not be solved through the existing die for forming an insulating layer.

Therefore, there is a need for the development of a die for forming an insulating layer to thinly and uniformly form an insulating layer at the target position of the electrode.

### DISCLOSURE OF THE INVENTION

### TECHNICAL PROBLEM

A task of the present invention is to solve the above-described problems, and to provide an electrode manufacturing device in which a die for forming an insulating layer capable of adjusting the position and angle of a nozzle part without damaging an active material layer is installed in an electrode manufacturing device, thereby significantly preventing scratches on the active material layer, uneven thickness of the formed insulating layer, and changes in an electrode shape due to thickening of the insulating layer.

### TECHNICAL SOLUTION

[1] The present invention provides an electrode manufacturing device comprising: a coater roller disposed to support an electrode sheet material; a moving space part in which the electrode sheet material is moved by the rotation of the coater roller; and a die for forming an insulating layer, installed on a moving path of the electrode sheet material, wherein the die for forming an insulating layer comprises a nozzle part for spraying an insulating liquid onto the electrode sheet material, a first angle adjusting part for adjusting an angle of the nozzle part in a moving direction of the electrode sheet material, a second angle adjusting part for adjusting an angle of the nozzle part in a direction perpendicular to the moving direction of the electrode sheet material, and an azimuth adjusting part formed to draw an arc around the rotation axis of the coater roller and capable of moving the position of the nozzle part along the arc.
[2] The present invention provides the electrode manufacturing device according to [1], wherein the die for forming an insulating layer is installed apart from the electrode sheet material.
[3] The present invention provides the electrode manufacturing device according to one or more among [1] and [2], wherein the electrode manufacturing device further comprises a position adjusting part for adjusting the position of the die for forming an insulating layer.
[4] The present invention provides the electrode manufacturing device according to one or more among [1] to [3], wherein the position adjusting part comprises at least one of a first linear guide formed along the moving direction of the electrode sheet material; a second linear guide formed along a direction perpendicular to the moving direction of the electrode sheet material; and a third linear guide for adjusting the position of the die for forming an insulating layer in a height direction.
[5] The present invention provides the electrode manufacturing device according to one or more among [1] to [4], wherein the electrode sheet material comprises a current collector and an active material layer disposed on at least a portion of the surface of the current collector, and the nozzle part is configured to adjust a position and an angle in order to spray the insulating liquid onto the active material layer.
[6] The present invention provides the electrode manufacturing device according to one or more among [1] to [5], wherein the active material layer comprises an inclined part that is inclined toward the current collector, in at least one end, and a flat part that is partitioned excluding the inclined part, and the nozzle part adjusts the spraying position and angle of the insulating liquid so that an insulating layer is formed on at least a portion of the inclined part.
[7] The present invention provides the electrode manufacturing device according to one or more among [1] to [6], wherein the current collector is adjacent to the inclined part and comprises a non-coated part on which the active material layer is not formed, and the nozzle part is configured to adjust the spraying position and angle of the insulating liquid so that an insulating layer is continuously formed over at least a portion of the inclined part and at least a portion of the non-coated part.
[8] The present invention provides the electrode manufacturing device according to one or more among [1] to [7], wherein the die for forming an insulating layer is plural, and the plurality of dies for forming an insulating layer is sequentially disposed in a moving direction of the electrode sheet material.
[9] The present invention provides the electrode manufacturing device according to one or more among [1] to [8], wherein each nozzle part comprised in the plurality of dies for forming an insulating layer is adjusted in position and angle so as to form two or more insulating layers.
[10] The present invention provides the electrode manufacturing device according to one or more among [1] to [9], wherein the electrode manufacturing device further comprises a drying part disposed behind the spraying position of the nozzle part based on the moving direction of the electrode sheet material.

### ADVANTAGEOUS EFFECTS

The electrode manufacturing device according to the present invention includes a die for forming an insulating layer, and the die for forming an insulating layer is characterized by including an angle adjusting part (a first angle adjusting part and a second angle adjusting part) for adjusting the spraying angle of a nozzle part, and an azimuth adjusting part for adjusting the position of the nozzle part to be orthogonal to the rotation axis of a coater roller. Through this, the distance between the nozzle part of the die for forming an insulating layer and the position where an insulating liquid is applied may be minimized at a level where scratches or slippage of the active material layer do not occur, and the insulating layer may be formed thinly and uniformly, thereby enabling the achievement of an electrode having excellent quality.

### BRIED DESCRIPTION OF DRAWINGS

FIG. 1 is a schematic diagram for explaining an electrode manufacturing device according to an embodiment of the present invention.
FIG. 2 is a plan view for explaining the positions of a coater roller and an azimuth adjusting part in an electrode manufacturing device according to an embodiment of the present invention.
FIG. 3 is a schematic diagram for explaining the conventional electrode manufacturing device.

### BEST MODE FOR CARRYING OUT THE INVENTION

First, prior to describing the present invention, words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

Meanwhile, terms used in the present specification are used only to explain embodiments and are not intended to limit the present invention. Singular expression includes plural expression, unless otherwise clearly indicated.

In the present specification, the terms "comprise," "include," or "have" are intended to specify the presence of a feature, number, step, component, or combination thereof, but should be understood not to preclude the possibility of the presence or addition of one or more other features, numbers, steps, components, or combinations thereof.

Hereinafter, the electrode manufacturing device of the present invention will be described in detail with reference to the drawings. When adding reference symbols to components in each drawing, the same components may have the same symbols as much as possible even if they are shown in different drawings. In addition, in describing the present invention, if it is judged that a specific description of a related known configuration or function may obscure the gist of the present invention, the detailed description may be omitted.

### Electrode Manufacturing Device

The present invention relates to an electrode manufacturing device, and particularly, to an electrode manufacturing device for a lithium secondary battery.

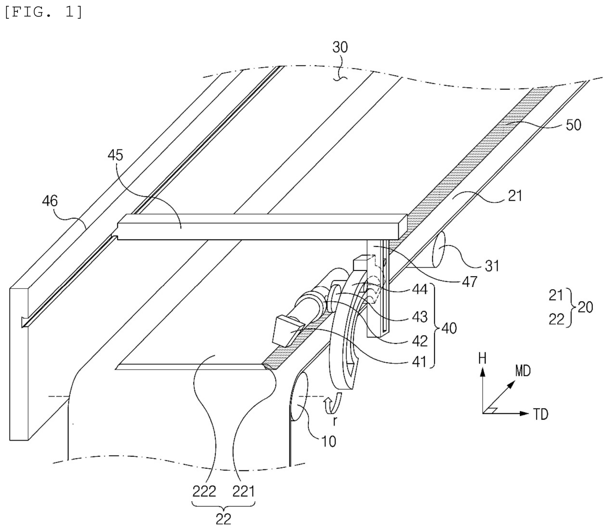

Specifically, referring to FIG. 1, an electrode manufacturing device according to an embodiment of the present invention is characterized by comprising: a coater roller (10) disposed to support an electrode sheet material (20); a moving space part (30) in which the electrode sheet material (20) is moved by the rotation of the coater roller (10); and a die (40) for forming an insulating layer installed on the moving path of the electrode sheet material (20), wherein the die (40) for forming an insulating layer comprises a nozzle part (41) for spraying an insulating liquid onto the electrode sheet material (20), a first angle adjusting part (42) for adjusting the angle of the nozzle part (41) in the moving direction of the electrode sheet material (20), a second angle adjusting part (43) for adjusting the angle of the nozzle part (41) in the direction perpendicular to the moving direction of the electrode sheet material (20), and an azimuth adjusting part (44) formed to draw an arc around the rotation axis of the coater roller (10) and capable of moving the position of the nozzle part (41) along the arc.

The coater roller (10) is disposed to support the electrode sheet material (20).

The coater roller (10) may be a cylindrical roller as shown in FIG. 1, and the electrode sheet material (20) may be transported in the machine direction (MD) of the electrode sheet material (20) according to the rotation of the coater roller (10).

The electrode sheet material (20) may be in the form of a sheet. Specifically, although not shown in FIG. 1, the electrode sheet material may be transported to the coater roller when an electrode roll on which the electrode sheet material is wound is unwound, and the coater roller supports the transported electrode sheet material, and the electrode sheet material may be moved in the moving direction of the electrode sheet material by the rotation of the coater roller.

The electrode sheet material (20) may be a positive electrode sheet material or a negative electrode sheet material, and specifically, may be a positive electrode sheet material.

The electrode sheet material (20) may include a current collector (21) and an active material layer (22) disposed on at least a portion of the surface of the current collector (21). The active material layer (22) may be disposed on one side or both sides of the current collector (21). A nozzle part (41) described later may be adjusted in a position and angle so as to spray an insulating liquid onto the active material layer (22).

Specifically, the active material layer (22) may include an inclined part (221) that is inclined toward the current collector (21) in at least on one end, and a flat part (222) that is partitioned excluding the inclined part (221). The inclined part (221) may be formed by the viscosity characteristics of an electrode slurry for forming the active material layer (22). In this case, an insulating layer (50) described later may be formed by being applied to at least a portion of the inclined part (221). Alternatively, the nozzle part (41) described later may be adjusted in a position and angle so as to spray an insulating liquid so that an insulating layer is formed on at least a portion of the inclined part (221).

In addition, the current collector (21) may further include a non-coated part adjacent to the inclined part (221), where the active material layer (22) is not formed. In this case, the insulating layer (50) described later may be continuously formed over at least a portion of the inclined part (221) and at least a portion of the non-coated part. Alternatively, the nozzle part (41) described later may adjust the spraying position and angle of an insulating liquid so that the insulating layer (50) is continuously formed over at least a portion of the inclined part (221) and at least a portion of the non-coated part.

As the electrode sheet material (20), the current collector (21), and the active material layer (22), materials and components known in the art may be used without limitation.

The current collector is not particularly limited as long as it has high conductivity without causing chemical changes in the battery. Specifically, the current collector may include at least one selected from the group consisting of copper, stainless steel, aluminum, nickel, titanium, calcined carbon, and an aluminum-cadmium alloy. For example, if the electrode or active material layer is a positive electrode or a positive electrode active material layer, the current collector may include aluminum, and if the electrode or active material layer is a negative electrode or a negative electrode active material layer, the current collector may include copper.

The current collector may be used in various forms such as a film, a sheet, a foil, a net, a mesh, a porous body, a foam, and a non-woven fabric. In addition, the current collector may include a polymer layer and metal layers disposed on both sides of the polymer layer, and the metal layer may include at least one selected from the group consisting of copper, stainless steel, aluminum, nickel, titanium, calcined carbon, and an aluminum-cadmium alloy.

The active material layer (22) may include an active material.

Specifically, if the active material is a negative electrode active material, for example, a compound capable of reversible intercalation and deintercalation of lithium may be used as the negative electrode active material (electrode active material) included therein. Specific examples of the negative electrode active material include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, an Si alloy, an Sn alloy, and an Al alloy; metal oxides capable of doping and dedoping lithium, such as SiO_{β} (0<β<2), SnO₂, vanadium oxide, and lithium vanadium oxide; or a composite including the metallic compound and the carbonaceous material, such as a Si-C composite and a Sn-C composite, and any one or a mixture of two or more of thereof may be used. In addition, a metal lithium thin film may be used as the negative electrode active material. In addition, both low-crystalline carbon and high-crystalline carbon may be used as a carbon material. The representative examples of the low-crystalline carbon include soft carbon and hard carbon, and the representative examples of the high-crystalline carbon include amorphous, plate-like, flaky, spherical or fiber-like natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

In addition, specifically, if the active material is a positive electrode active material, the positive electrode active material (electrode active material) is not particularly limited, and any positive electrode active material known in the art may be used without limitation. Specifically, the positive electrode active material is a layered compound such as lithium cobalt oxide (LiCoO₂) and lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤ 0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni-site type lithium nickel oxides represented by a chemical formula of LiNi_{1-c2}Mc₂O₂ (where M is at least one selected from the group consisting of Co, Mn, Al, Cu, Fe, Mg, B, and Ga, and 0.01≤c2≤0.3 is satisfied); lithium manganese composite oxides represented by a chemical formula of LiMn_{2-c3}M_{c3}O₂ (where M is at least one selected from the group consisting of Co, Ni, Fe, Cr, Zn, and Ta, and 0.01≤c3≤0.1 is satisfied) or Li₂Mn₃MO₈ (where M is at least one selected from the group consisting of Fe, Co, Ni, Cu, and Zn); or LiMn₂O₄, in which a portion of Li in the chemical formula is substituted with an alkaline earth metal ion, but is not limited thereto.

The active material layer may selectively further include a binder, a conductive material, and/or a thickener in addition to the active material.

The binder includes any one binder polymer selected from the group consisting of a polyvinylidene fluoride polymer, polyvinyl alcohol, styrene butadiene rubber, polyethylene oxide, carboxyl methyl cellulose, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinyl acetate, polyethylene-co-vinyl acetate, polyarylate, and a low molecular weight compound having a molecular weight of 10,000 g/mol or less, or a mixture of two or more thereof.

The conductive material is not particularly limited as long as it does not cause a chemical change in the battery and has conductivity, and for example, graphite such as natural graphite and artificial graphite; carbon blacks such as carbon black, acetylene black, Ketjen black, channel black, furnace black, lamp black, and thermal black; conductive fibers such as carbon fibers and metal fibers; conductive tubes such as carbon nanotubes; metal powders such as fluorocarbon, aluminum, and nickel powders; conductive whiskers of zinc oxide and potassium titanate; conductive metal oxides such as titanium oxide; conductive materials such as polyphenylene derivatives, or the like may be used.

The thickener may be, for example, carboxymethyl cellulose (CMC).

The active material layer may be manufactured by adding an active material, and optionally a binder, a conductive material, a thickener, or the like to a solvent to prepare an active material slurry, and then applying the active material slurry to a current collector, drying, and rolling. Water, NMP, or the like may be used as the solvent.

If an active material layer (22) is formed on the electrode sheet material (20), the electrode manufacturing device may further include a die for forming an active material layer (not shown). The die for forming an active material layer may spray or discharge an active material slurry. The die for forming an active material layer may be installed in a moving space part (30) so as to be spaced apart from the electrode sheet material (20). The spraying of the active material slurry by the die for forming an active material layer and the spraying of the insulating liquid by the die for forming an insulating layer described later may be performed substantially simultaneously or at different times. Specifically, after spraying the active material slurry by the die for forming an active material layer at the target position, the spraying of the insulating liquid by the die for forming an insulating layer may be performred. Alternatively, after spraying the active material slurry by the die for forming an active material layer at the target position, the spraying of the insulating liquid of the die for forming an insulating layer may be performed at substantially the same time.

The moving space part (30) is provided as a place where the electrode sheet material (20) is moved by the rotation of the coater roller (10). Specifically, the moving space part (30) provides a moving path (MD) along which the electrode sheet material (20) is moved by the rotation of the coater roller (10).

As shown in FIG. 1, the moving space part (30) may include one or more support rollers (31) disposed along the moving direction (MD) of the electrode sheet material (20). The support roller (31) may play a role of supporting the electrode sheet material (20) so that the electrode sheet material (20) may be easily transported along the moving direction. Alternatively, the support roller (31) may play a role of changing the moving path of the electrode sheet material (20) to a desired position.

The die (40) for forming an insulating layer may be provided for the purpose of forming an insulating layer by spraying an insulating liquid on the electrode sheet material (20).

The die (40) for forming an insulating layer is installed on the moving path of the electrode sheet material (20). Specifically, the die (40) for forming an insulating layer may be installed spaced apart from the electrode sheet material (20). In addition, the die (40) for forming an insulating layer may be installed spaced apart from the coater roller (10) by a predetermined distance. More specifically, the die (40) for forming an insulating layer may be disposed so that the nozzle part (41) (discharge port) is spaced apart from the coater roller (10) and is orthogonal to the rotation axis (r) of the coater roller (10). The orthogonal disposition may be achieved through a first angle adjusting part (42), a second angle adjusting part (43), and an azimuth adjusting part (44), described later.

Specifically, the die (40) for forming an insulating layer includes a nozzle part (41) for spraying an insulating liquid onto the electrode sheet material (20), a first angle adjusting part (42) for adjusting the angle of the nozzle part (41) in the moving direction of the electrode sheet material (20), a second angle adjusting part (43) for adjusting the angle of the nozzle part (41) in a direction perpendicular to the moving direction of the electrode sheet material (20), and an azimuth adjusting part (44) formed to draw an arc around the rotation axis of the coater roller (10) and capable of moving the position of the nozzle part (41) along the arc.

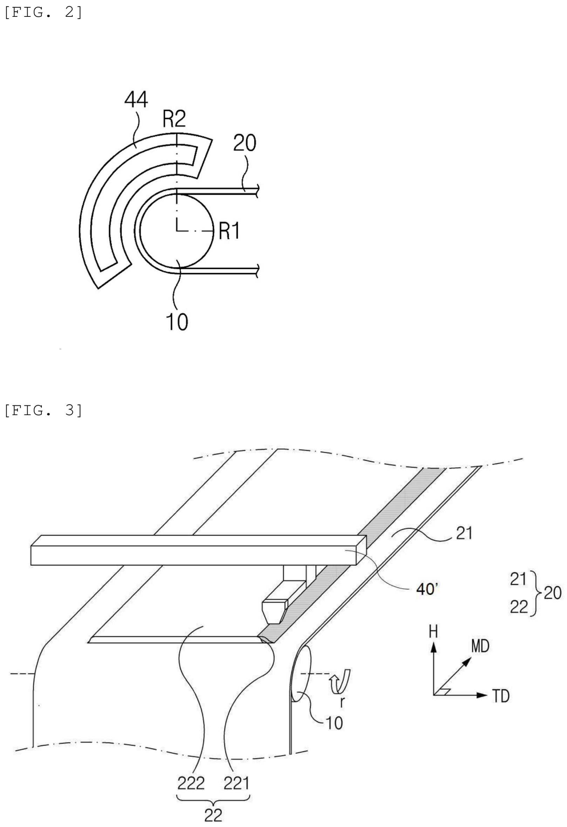

For example, the conventional electrode manufacturing device is shown in FIG. 3. In the conventional electrode manufacturing device, a die (40') for forming an insulating layer is fixedly disposed on a coater roller (10) or an electrode sheet material (20) while being spaced apart. Referring to FIG. 3, in terms of the distance between the nozzle part of the die (40') for forming an insulating layer and an application position, if the distance between the nozzle part of the die (40') for forming an insulating layer and the application position is too close, the amount of an insulating liquid discharged may be minimized, but the nozzle part or the structure of the die for forming an insulating layer scratches or pushes an adjacent active material layer, which causes structural damage to the active material layer and causes poor quality of the electrode. In particular, a step between the active material layer and the current collector is about 100 to 500 µm, so it may not be easy for the die (40') for forming an insulating layer to spray the insulating liquid without damaging the active material layer. Meanwhile, if the distance between the nozzle part of the die (40') for forming an insulating layer and the application position is too far, the discharging amount of an insulating liquid is excessive, which causes the insulating layer to be formed thickly. This may cause changes in the shape of the electrode, such as warping due to the swelling of the insulating layer due to an electrolyte, and a detachment phenomenon of the insulating layer may occur. Meanwhile, in terms of the angle between the nozzle part and the application position of the die (40') for forming an insulating layer, it is important to adjust the position of the nozzle part to be orthogonal to the rotation axis of the coater roller (10). For example, if the spraying direction of the nozzle part is not orthogonal to the rotation axis of the coater roller (10) but is tilted, the active material layer may be scratched in a portion where the distance between the nozzle part and the coater roller (10) is close, and there may be a problem that the thickness of the insulating layer is non-uniform or the processability is deteriorated in a portion where the distance between the nozzle part and the coater roller (10) is far.

Therefore, in order to solve the problem, the electrode manufacturing device according to the present invention includes a die (40) for forming an insulating layer, and the die (40) for forming an insulating layer is characterized by including an angle adjusting part (a first angle adjusting part (42) and a second angle adjusting part (43)) for adjusting the spraying angle of the nozzle part (41), and an azimuth adjusting part (44) for adjusting the position of the nozzle part (41) to be orthogonal to the rotation axis of the coater roller (10). Through this, the distance between the nozzle part (41) of the die (40) for forming an insulating layer and the application position of the insulating liquid may be minimized to a level where scratches or slippage of the active material layer do not occur, and an insulating layer may be formed thinly and uniformly, thereby enabling the achievement of an electrode with excellent quality.

In addition, according to the electrode manufacturing device of the present invention, the position and angle of the nozzle part (41) may be simply and precisely adjusted so that the insulating layer may be formed at a desired position, and accordingly, the insulating layer may be formed with a thin and uniform thickness, so that the amount of the insulating liquid used to form the insulating layer is significantly reduced, which is also advantageous in terms of cost reduction.

The nozzle part (41) may be provided as a place where the insulating liquid is sprayed or discharged. The nozzle part (41) may include a discharge port through which the insulating liquid is dispersed, and a discharge path that transports the insulating liquid to the discharge port.

The spraying method of the nozzle part (41) may be selected from thermal spray, compressed air spray, ultrasonic spray, or the like, but is not limited thereto.

The first angle adjusting part (42) is configured to adjust the angle of the nozzle part (41) in the moving direction (Machine direction, MD) of the electrode sheet material (20) or in the longitudinal direction of the electrode sheet material (20), and the second angle adjusting part (43) is configured to adjust the angle in the direction perpendicular to the moving direction (Transverse direction, TD) of the electrode sheet material (20) of the nozzle part (41), or the width direction of the electrode sheet material (20). For example, when an insulating layer is to be formed over the inclined part of the active material layer at the electrode end and the non-coated part of the current collector, the spraying angle of the nozzle part (41) may be adjusted through the first and second angle adjusting parts so that the spraying direction of the nozzle part (41) is directed toward the inclined part.

In addition, the azimuth adjusting part (44) is formed to draw an arc centered on the rotation axis of the coater roller (10). Accordingly, the position of the nozzle part (41) may be moved along the arc around the rotation axis.

The azimuth adjusting part (44) may adjust the position of the nozzle part (41) to be orthogonal to the rotation axis of the coater roller (10) according to the above-described feature. Accordingly, the distance between the nozzle part (41) of the die (40) for forming an insulating layer and the application position of the insulating liquid may be minimized at a level where scratches or slippage of the active material layer do not occur. In addition, the angle and length of the inclined part of the active material layer vary depending on the viscosity of an electrode slurry used to form the active material layer, and the thickness and length of the insulating layer may vary depending on the viscosity and application amount of the insulating liquid, and it is also preferable that the position and angle of the die (40) for forming an insulating layer may be adjusted according to the circumstances. If the angle of the nozzle part (41) is adjusted by only installing the first angle adjusting part (42) and the second angle adjusting part (43) without introducing the azimuth adjusting part (44), it is difficult to precisely adjust the gap between the position where the insulating layer of the electrode is formed and the position where the spraying of the insulating liquid by the die (40) for forming an insulating layer is performed, and it may be difficult to adjust the thickness of the insulating layer by considering the spreadability according to the viscosity of the insulating liquid, the speed of the discharged insulating liquid, the discharge amount, or the like. Meanwhile, the azimuth adjusting part (44) is required to be formed to draw an arc around the rotation axis of the coater roller (10), and if only the height of the nozzle part (41) (for example, a direction simultaneously perpendicular to the MD and TD of the electrode sheet material (20)) is adjusted instead of the azimuth adjusting part (44), it may be difficult to form an orthogonal shape between the die (40) for forming an insulating layer and the coater roller (10) at a desired position, and it may be difficult to adjust the thickness of the insulating layer by considering the spreadability according to the viscosity of the insulating liquid, the speed of the discharged insulating liquid, the discharge amount, or the like.

The angle of the arc drawn by the azimuth adjusting part (44) is not particularly limited, and may be, for example, greater than 0° and 360° or less, specifically greater than 0° and 270° or less, more specifically greater than 0° and 180° or less, and most specifically 90°.

The radius (R2) of the arc drawn by the azimuth adjusting part (44) may be at least 1 time, specifically 1 to 3 times the radius (R1) of the coating roller, but is not particularly limited.

Through the first angle adjusting part (42), the second angle adjusting part (43), and the azimuth adjusting part (44), the position and angle of the nozzle part (41) may be precisely adjusted.

Specifically, the electrode sheet material (20) may include a current collector (21) and an active material layer (22) disposed on at least a portion of the surface of the current collector (21), and the nozzle part (21) may be adjusted in position and angle so as to spray an insulating liquid onto the active material layer (22). In addition, the active material layer (22) may include an inclined part (221) that is inclined toward the current collector (21), in at least one end, and a flat part (222) that is partitioned excluding the inclined part (221), and the nozzle part (21) may be configured to adjust the spraying position and angle of the insulating liquid so that an insulating layer (50) is formed on at least a portion of the inclined part (221). In addition, the current collector (21) may be adjacent to the inclined part (221) and may include a non-coated part on which the active material layer (22) is not formed, and the nozzle part (41) may be configured to adjust the spraying position and angle of the insulating liquid so that an insulating layer (50) is continuously formed over at least a portion of the inclined part (221) and at least a portion of the non-coated part. For example, the angle formed by the spraying direction of the insulating liquid of the nozzle part (41) and the current collector or electrode sheet material may be 5° to 45°, preferably 15° to 35°, and if the angle is within the range, the problem of the active material layer being scratched by the die (40) for forming an insulating layer may be prevented, while preventing the problem of the current collector being pressed by the discharge of the insulating liquid and the insulating layer being coated thickly.

In addition, the electrode manufacturing device may further include a position adjusting part for adjusting the position of the die (40) for forming an insulating layer. The position adjusting part may be provided to adjust the position of the die (40) for forming an insulating layer itself, rather than the angle of the nozzle part (41). For example, the position adjusting part may include at least one of a first linear guide (46) formed along the moving direction (MD) of the electrode sheet material (20); a second linear guide (45) formed along the perpendicular direction (TD) to the moving direction of the electrode sheet material (20); and a third linear guide (47) for adjusting the position of the die for forming an insulating layer in the height direction (H). Accordingly, the position of the die (40) for forming an insulating layer may be adjusted along the first linear guide (45), the second linear guide (46), and/or the third linear guide (47). In this case, the height direction (H) of the die (40) for forming an insulating layer may mean a direction orthogonal to both the MD direction and the TD direction.

The electrode manufacturing device may further include a drying part (not shown) disposed behind the spraying position of the nozzle part (41) based on the moving direction of the electrode sheet material (20). The drying part may dry the insulating liquid dispersed from the nozzle part (41) to facilitate the formation of the insulating layer.

The drying means of the drying part is not particularly limited, and may employ, for example, a hot air method, a direct heating method, an induction heating method, or the like, and specifically, drying through the drying part may be performed at 50°C to 180°C.

The electrode manufacturing device may further include a recovery roller (not shown) that winds the electrode sheet material (20) on which the insulating layer is formed. Specifically, the recovery roller may be disposed behind the spraying position of the nozzle part (41) based on the moving direction of the electrode sheet material (20). More specifically, if the electrode manufacturing device further includes a drying part, the recovery roller may be disposed behind the position of the drying part based on the moving direction of the electrode sheet material (20).

The die for forming an insulating layer may be plural.

The plurality of the dies for forming an insulating layer may be disposed sequentially in the moving direction (MD) of the electrode sheet material.

Each nozzle part included in the plurality of dies for forming an insulating layer may be adjusted in position and angle to form two or more insulating layers.

For example, the plurality of dies for forming an insulating layer may be disposed sequentially adjacent to each other in the moving direction (MD) of the electrode sheet material, and then each angle adjusting part and azimuth adjusting part may be adjusted to form two or more insulating layers.

In addition, the plurality of dies for forming an insulating layer may be disposed sequentially in the direction (TD) perpendicular to the moving direction of the electrode sheet material. In this case, the plurality of dies for forming an insulating layer may simultaneously form insulating layers on two inclined parts (221) formed at both ends of the active material layer.

In addition, some of the plurality of dies for forming an insulating layer may be disposed on one side of the electrode sheet material, and the remainder may be disposed on the other side of the electrode sheet material, thereby forming insulating layers on both sides of the electrode sheet material.

The embodiments according to the present invention described above may be modified in various different forms, and the scope of the present invention should not be construed as being limited to the embodiments described below. The embodiments of the present invention are provided to more completely explain the present invention to a person having ordinary skill in the art.

### [Description of Symbols]

10: coater roller, 20: electrode sheet material, 21: current collector, 211: non-coated part, 22: active material layer, 221: inclined part, 222: flat part, 30: moving space part, 31: support roller, 40: die for forming an insulating layer, 41: nozzle part, 42: first angle adjusting part, 43: second angle adjusting part, 44: azimuth adjusting part, 45, 46: position adjusting part, 45: second linear guide, 46: first linear guide, 47: third linear guide, 50: insulating layer.

## Claims

1. An electrode manufacturing device comprising:
a coater roller disposed to support an electrode sheet material;
a moving space part in which the electrode sheet material is moved by the rotation of the coater roller; and
a die for forming an insulating layer, installed on a moving path of the electrode sheet material, wherein
the die for forming an insulating layer comprises a nozzle part for spraying an insulating liquid onto the electrode sheet material, a first angle adjusting part for adjusting an angle of the nozzle part in a moving direction of the electrode sheet material, a second angle adjusting part for adjusting the angle of the nozzle part in a direction perpendicular to the moving direction of the electrode sheet material, and an azimuth adjusting part formed to draw an arc around a rotation axis of the coater roller and capable of moving a position of the nozzle part along the arc.

2. The electrode manufacturing device according to claim 1, wherein the die for forming an insulating layer is installed apart from the electrode sheet material.

3. The electrode manufacturing device according to claim 1, wherein the electrode manufacturing device further comprises a position adjusting part for adjusting a position of the die for forming an insulating layer.

4. The electrode manufacturing device according to claim 3, wherein the position adjusting part comprises at least one of a first linear guide formed along the moving direction of the electrode sheet material; a second linear guide formed along a direction perpendicular to the moving direction of the electrode sheet material; and a third linear guide for adjusting the position of the die for forming an insulating layer in a height direction.

5. The electrode manufacturing device according to claim 1, wherein
the electrode sheet material comprises a current collector and an active material layer disposed on at least a portion of a surface of the current collector, and
the nozzle part is configured to adjust a position and an angle in order to spray the insulating liquid onto the active material layer.

6. The electrode manufacturing device according to claim 5, wherein
the active material layer comprises an inclined part that is inclined toward the current collector, in at least one end, and a flat part that is partitioned excluding the inclined part, and
the nozzle part adjusts a spraying position and an angle of the insulating liquid so that an insulating layer is formed on at least a portion of the inclined part.

7. The electrode manufacturing device according to claim 6, wherein
the current collector is adjacent to the inclined part and comprises a non-coated part on which the active material layer is not formed, and
the nozzle part is configured to adjust the spraying position and the angle of the insulating liquid so that an insulating layer is continuously formed over at least a portion of the inclined part and at least a portion of the non-coated part.

8. The electrode manufacturing device according to claim 1, wherein
the die for forming an insulating layer is plural, and
the plurality of dies for forming an insulating layer is sequentially disposed in the moving direction of the electrode sheet material.

9. The electrode manufacturing device according to claim 8, wherein each nozzle part included in the plurality of dies for forming an insulating layer is adjusted in position and angle so as to form two or more insulating layers.

10. The electrode manufacturing device according to claim 1, wherein the electrode manufacturing device further comprises a drying part disposed behind a spraying position of the nozzle part based on the moving direction of the electrode sheet material.
